# NEUE EUROPÄISCHE PATENTSCHRIFT

(11) **EP 0 824 639 B2**
(45) Veröffentlichungstag und Bekanntmachung des Hinweises auf die Entscheidung über den Einspruch: **04.09.2002**
(45) Hinweis auf die Patenterteilung: 28.07.1999
(21) Anmeldenummer: 96901709.4
(22) Anmeldetag: 01.02.1996
(51) Int. Cl.: F16D 65/16, F16D 55/224

(54) **SCHEIBENBREMSE FÜR FAHRZEUGE, INSBESONDERE STRASSENFAHRZEUGE**
DISC BRAKE FOR VEHICLES, IN PARTICULAR ROAD VEHICLES
FREIN A DISQUE POUR VEHICULE, NOTAMMENT POUR VEHICULE ROUTIER

(30) Priorität: 27.04.1995 DE 19515063
(43) Veröffentlichungstag der Anmeldung: 25.02.1998
(73) Patentinhaber: KNORR-BREMSE Systeme für Nutzfahrzeuge GmbH, 80809 München (DE)
(72) Erfinder: BIEKER, Dieter, D-83080 Oberaudorf (DE); BAUMGARTNER, Hans, D-85368 Moosburg (DE)
(74) Vertreter: Specht, Peter, Dipl.-Phys.
(86) Internationale Anmeldenummer: DE9600193
(87) Internationale Veröffentlichungsnummer: WO96034216

(56) Entgegenhaltungen:
- EP-A- 0 271 864
- EP-A- 0 436 906
- DE-A- 3 610 569
- DE-A- 4 032 886
- DE-A- 4 307 019
- FR-A- 2 306 372

## Beschreibung

Die Erfindung betrifft eine Scheibenbremse nach dem Gattungsbegriff des Patentanspruches 1.

Bei Scheibenbremsen gattungsgemäßer Bauart (DE-A- 40 32 886) ist innerhalb des rückwärtigen Teiles eines eine Bremsscheibe umfassenden Bremssattels eine mit einem von einem Betätigungszylinder beaufschlagbaren Drehhebel versehene Zuspanneinrichtung vorgesehen, welche eine zwei Stellspindeln mit Druckstücken tragende, am Bremssattel verschiebbar abgestützte Brücke aufweist. Das auf den bremsscheibenabgewandten Teil der Brücke exzentrisch einwirkende Ende des Drehhebels stützt sich mittels Gleit- oder Wälzlagerlementen am rückwärtigen Ende des Bremssattels ab. Der rückwärtige Abschnitt des Bremssattels ist als gesondertes Gehäuse ausgeführt, welches entlang einer Trennlinie mit dem Bremssattel verschraubbar ist. Die Bremsreaktionskräfte werden bei Bremsbetätigung rückwärtig in den aufgeschraubten Gehäuseabschnitt eingeleitet, was Verschraubungs-, Festigkeits- und Dichtprobleme hervorrufen kann, insbesondere bei den bei Scheibenbremsen der in Rede stehenden Art geforderten Standzeiten. Probleme der vorstehend genannten Art können auch bei mit lediglich einer Stell- bzw. Druckspindel ausgeführten Scheibenbremsen zutagetreten.

Bei Scheibenbremsen bekannter Art (FR-A-2 306 372; DE-A- 36 10 569) ist bereits ein einteiliger Bremssattel bekannt, welcher in seinem rückwärtigen, die Reaktionskräfte einer Zuspanneinheit aufnehmenden Bereich weitgehend geschlossen ist. Die Zuspanneinheit wird bei derartigen Scheibenbremsen in ihren Einzelteilen durch eine im wesentlichen seitlich angesetzte Öffnung eingeführt. Die endgültige Montage erfolgt demnach innerhalb des Bremssattels, was mit beträchtlichem Zeitaufwand und gegebenenfalls mit dem Problem ungenauer Einpassung verbunden ist.

Die FR-A-2 306 372 zeigt eine Zuspanneinheit, die zwar einen Drehhebel und einen Exzenter, aber keine Stellspindel aufweist.

Die DE-A-3 610 569 zeigt eine Zuspanneinheit mit Drehhebel Exzenter und Stellspindel, aber keine Brücke.

Bei einer gattungsfremden Scheibenbremse (EP-A-0 436 906) sind in einem gemeinsamen Gehäuse die Bestandteile einer mechanischen Feststellbremse und die Bestandteile einer hydraulischen Betriebsbremse durch die der Bremsscheibe zugewandte Öffnung einführbar, wobei zusätzliche Mittel in Form eines im Inneren des Gehäuses zu fixierenden Befestigungsringes erforderlich sind, um die Wirkposition beider Bremsen zueinander festzulegen.

Eine gattungsgemäße Scheibenbremse ist aus der DE 4 307 019 A1 bekannt, durch hier ist der rückwartige Abschnitt des Bremssattels als gesonderter Teil, nämlich als Deckel, ausgebildet, was zu den eingangs beschriebenen Verschraubungs-, Festigkeits- und Dichtproblemen führen kann.

Davon ausgehend besteht die Aufgabe der Erfindung darin, eine Scheibenbremse der gattungsgemäßen Art so auszugestalten, daß bei problemfreier Einleitung der Brems-Reaktionskräfte am Bremssattel eine noch weitergehende Schließung des Bremssattelgehäuses ermöglicht ist. Hierdurch sollen am Bremssattel vorhandene Dichtbereiche vollkommen unbeeinflußt sein von Brems- bzw. Bremsreaktionskräften, um bei Formstabilität des Bremssattelgehäuses die geforderte Betriebssicherheit während längeren Einsatzes zu gewährleisten.

Zur Lösung dieser Aufgabe dienen die Merkmale nach dem Kennzeichnungsteil des Patentanspruches 1.

Durch die einteilige Gestaltung des Bremssattels, weicher kostensparend als Gußteil ausgebildet sein kann, ist eine direkte Übertragung der Bremskräfte in den Sattel ermöglicht, da der bremsscheibenabgewandte, rückwärtige Bereich des die Zuspanneinheit aufnehmenden Bremssattels mit Ausnahme der verhältnismäßig klein dimensionierbaren Durchgriffsöffnung für den Betätigungszylinder im wesentlichen geschlossen ist. Die Zuspanneinheit einschließlich aller ihrer Bauteile ist als eine vormontierte Einheit bei von der Bremsscheibe abgenommenem Bremssattel durch die bremsscheibenzugewandte Öffnung einführbar. Vorzugsweise ist diese Öffnung des Bremssattels nach Einführen der Zuspanneinheit von einer Verschlußplatte verschließbar, welche im Falle einer zweispindeligen Bremsscheibenkonstruktion durch die Druckstücke an den vorderen Enden der Stellspindeln unter Abdichtung durchsetzt ist. Die Zuspanneinheit kann durch einfache Halte- oder Klemmelemente als vormontierte Einheit ausgebildet sein; ihre Position innerhalb des als Gehäuse wirkenden Abschnittes des Bremssattels wird durch die am rückwärtigen Wandabschnitt des Bremssattels innenseitig sich abstützende Lagerung und bremsscheibenzugewandt durch die die Zuspanneinheit rückwärtig verspannende, an der Verschlußplatte sich abstützende Druckfeder bestimmt.

Vorteilhafte Ausgestaltungen und Weiterbildungen sind in weiteren Patentansprüchen aufgeführt.

Die Erfindung ist nachfolgend anhand eines Ausführungsbeispieles unter Bezugnahme auf die beigefügte Zeichnung erläutert.
- Fig. 1: ist eine Längsschnittansicht einer Scheibenbremse unter Darstellung des einteiligen Bremssattels mit im Bremssattel vormontiert eingefügter Zuspanneinheit;
- Fig. 2: ist eine Einzelschnittansicht unter Darstellung der vormontierten Zuspanneinheit;
- Fig. 3: ist eine teilweise geschnittene Unteransicht der vormontierten Zuspanneinheit nach Fig. 2;
- Fig. 4: ist eine der Darstellung nach Fig. 3 entsprechende Ansicht der Zuspanneinheit in Einbaulage innerhalb des Bremssattels mit am rückwärtigen Ende desselben angesetzem Betätigungszylinder zur Beaufschlagung des Drehhebels.

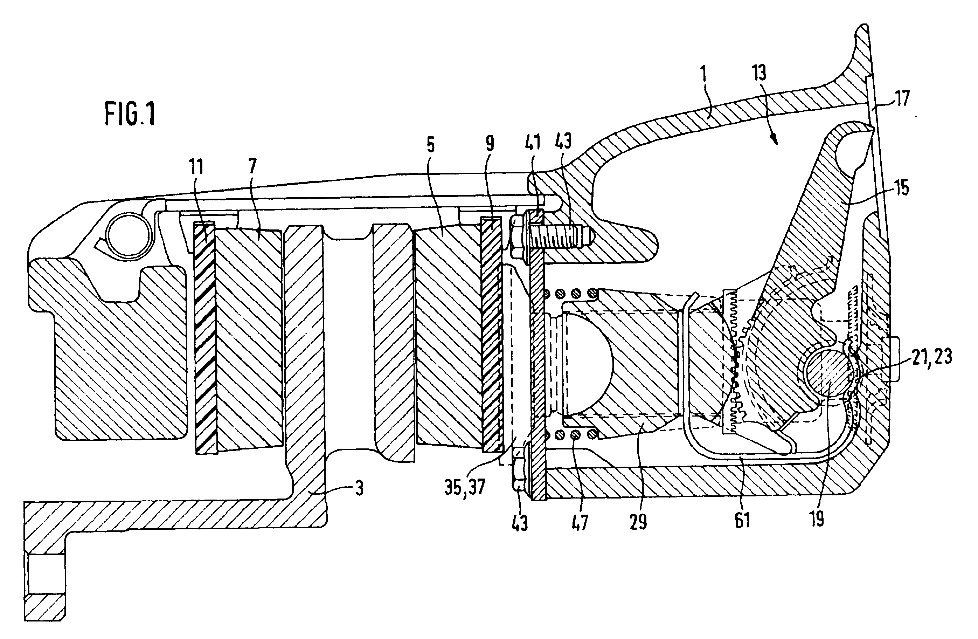

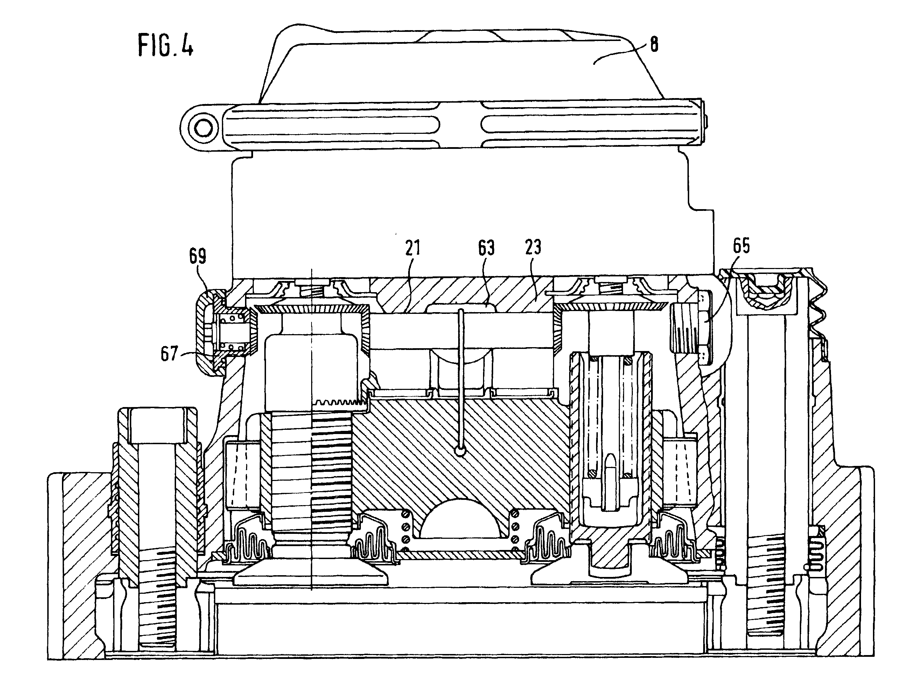

In Fig. 1 der Zeichnung ist in Schnittansicht eine Scheibenbremse mit einem Bremssattel 1 dargestellt, welcher eine einem abzubremsenden Fahrzeugrad zugeordnete Bremsscheibe 3 umfaßt. Zu beiden Seiten der Bremsscheibe stützen sich Bremsbacken 5 und 7 am Bremssattel ab. Der Bremssattel ist an einem (nicht dargestellten) Träger quer zur Bremsscheibe 3 verschieblich geführt, derart, daß bei Bremsbetätigung durch den in Fig. 4 in seinem Umriß wiedergebenen Bremszylinder 8 die Bremsbeläge 9 und 11 der vorstehend genannten Bremsbacken in Anlage mit der Bremsscheibe gelangen.

Der Bremssattel 1 ist gemäß der Erfindung einteilig ausgeführt, d. h. der in der Zeichnung nach Fig. 1 rechts befindliche, eine Zuspanneinheit 13 aufnehmende Abschnitt und der die Bremsscheibe 3 umfassende Abschnitt sind einteilig als Gußteil oder Schmiedeteil aufgeführt. Die Zuspanneinheit 13 weist einen Drehhebel 15 auf, welcher in der Ansicht nach Fig. 1 von der Zuspanneinheit in Richtung einer am rückwärtigen Ende des Bremssattels 1 befindlichen Öffnung 17 auskragt und um eine senkrecht zur Achse der Bremsscheibe stehende Achse einer Stützwalze 19 schwenkbar ist. Die Stützwalze ist drehbar an Abstützlagern 21 und 23 geführt, welche am rückwärtigen Abschnitt des einteiligen Bremssattels 1 innenseitig ausgebildet sind. Das in der Darstellung untere Ende des Drehhebels liegt mittels zweier halbzylindrischer Absätze 25 und 27 an einer Brücke 29 an, in welcher achssymetrisch unter Gewindeeingriff zwei Stellspindeln 31 und 33 mit an diesen ausgebildeten, der Bremssscheibe zugewandten Druckstücken 35 und 37 geführt sind. Der Drehmittelpunkt der beiden halbzylindrischen Absätze 25 und 27 am unteren Ende des Drehhebels 15 ist versetzt zur Achse der Stützwalze 19, derart, daß bei gemäß Fig. 1 gegen den Uhrzeigersinn gerichtet verlaufender Drehung des Drehhebels 15 eine Exzenterbetätigung gegenüber der Brücke 29 erfolgt und demnach die mit der Brücke verschraubten Stellspindeln 31 und 33 in Richtung der Bremsscheibe verschiebbar sind. Die insoweit beschriebene Anordnung aus Drehhebel, exzentrischer Lagerung, Brücke und Stellspindeln entspricht einer an sich bekannten Konstruktion einer pneumatisch zugespannten Scheibenbremse. Die Lagerung des Drehhebels 15 und die Umsetzung der Exzentrizität in die Längsverschiebung der Brücke kann auch einer anderen Konstruktion entsprechen, bei welcher in Umkehrung der Anordnung die Stützwalze der Brücke zugewandt ist und als Exzenter auf diese einwirkt, während der nach Fig. 1 untere Hebelabschnitt an der Rückseite des Bremssattels schwenkbar abgestützt ist, z. B. unter Verwendung von Gleit- oder Wälzlagern.

Zur seitlichen Abstützung der Brücke 29 sind Gleitelemente 39 vorgesehen, welche bei Bremsbetätigung über die Druckstücke eingehende Umfangskräfte aufnehmen und an den Bremssattel ableiten. Die Gleitelemente 39 können aus Stahl bestehen und die Form von Zylinderkörpern aufweisen; es können jedoch auch Gleitelemente von anderer Konfiguration verwendet werden.

Gemäß Fig. 1 ist der die Zuspanneinheit 13 aufnehmende Abschnitt des einteiligen Bremssattels an der Vorderseite, d. h. in der der Bremsscheibe zugewandten Lage durch eine Verschlußplatte 41 verschlossen. Die Verschlußplatte 41 ist mittels Schraubbolzen 43 in der aus Fig. 1 ersichtlichen Weise am Bremssattel verschraubt, wobei Dichtelemente in die Dichtflächen zwischen Verschlußplatte und Bremssattel eingelegt sind. Jedes der Druckstücke 35, 37 ist von einem Faltenbalg 45 umgeben, welcher an seinem Außenumfang an der Verschlußplatte 41 festgeklemmt ist, derart, daß die Durchführungen der Druckstücke gegenüber dem Inneren des Bremssattels sicher abgedichtet sind. Im Mittelteil der Brücke stützt sich eine Druckfeder 47 ab, welche die Brücke in Enffernungsrichtung von der Bremsscheibe 3 belastet.

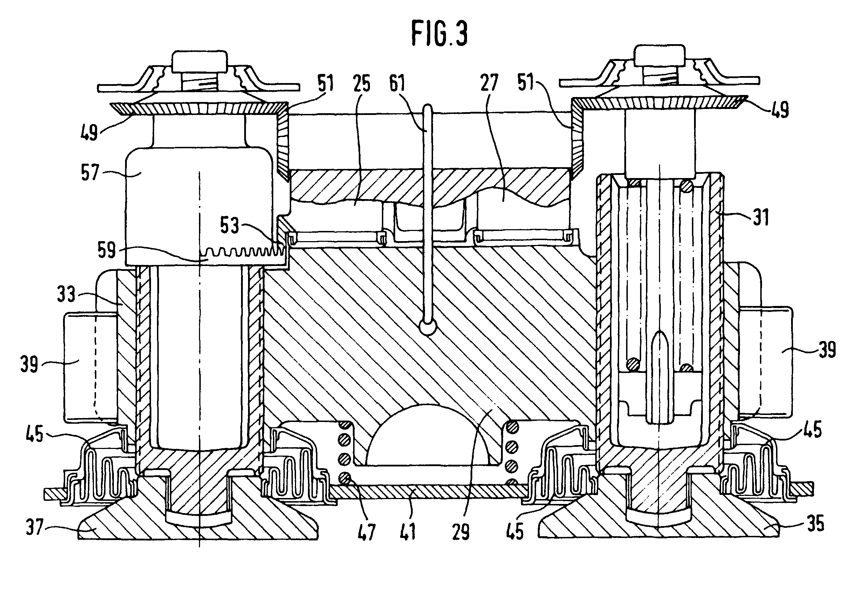

Im Inneren der in Fig. 3 und 4 der Zeichnung linksseitig wiedergegeben Stellspindel 33 befindet sich eine (nicht dargestellte) Nachstelleinrichtung von an sich bekannter Wirkungsweise, welche eine Relatiwerschraubung der Stellspindel in Richtung der Bremsscheibe auszulösen vermag, wobei eine Synchronisiereinrichtung vorgesehen ist, welche die Nachstellbewegung auf die in Fig. 3 und 4 rechts befindlich dargestellte Stellspindel 31 zu übertragen vermag. An den rückwärtigen Enden der beiden Stellspindeln 31 und 33 sind in nicht näher erläuterter Weise Kegelräder 49 gelagert, welche mit an den stirnseitigen Enden der Stützwalze 19 befindlichen Kegelrädern 51 kämmen. Die Kegelräder 51 sind entweder direkt mit den Stützwalzenenden verbunden oder sie befinden sich an den Enden einer im Inneren der Stützwalze drehbar geführten (nicht dargestellten) Welle. An dem nach Fig. 3 und 4 linksseitigen Ende des Absatzes 25 des Drehhebels ist ein Zahnradabschnitt 53 ausgebildet, welcher mit einem mittels einer Hülse 57 mit dem Kegelrad 49 drehbar verbundenen Zahnrad 59 kämmt. Bei Betätigung des Drehhebels 15 ausgelöste Drehbewegungen des Zahnradabschnittes 53 führen zu einer Drehbewegung des Zahnrades 59 und folglich zu einer Drehbewegung des Kegelrades 49. Über die Kegelradverbindung erfolgt eine Übertragung der Drehbewegung auf das der Stellspindel 31 zugeordnete Kegelzahnrad 49, derart, daß im einzelnen nicht erläuterte Dreh- und Nachstellbewegungen mittels der Synchronisiereinrichtung der vorstehend erläuterten Art auf beide Stellspindeln übertragen werden und ein gleichförmiges Andrücken der Druckstücke gegenüber der Bremsscheibe gewährleistet ist.

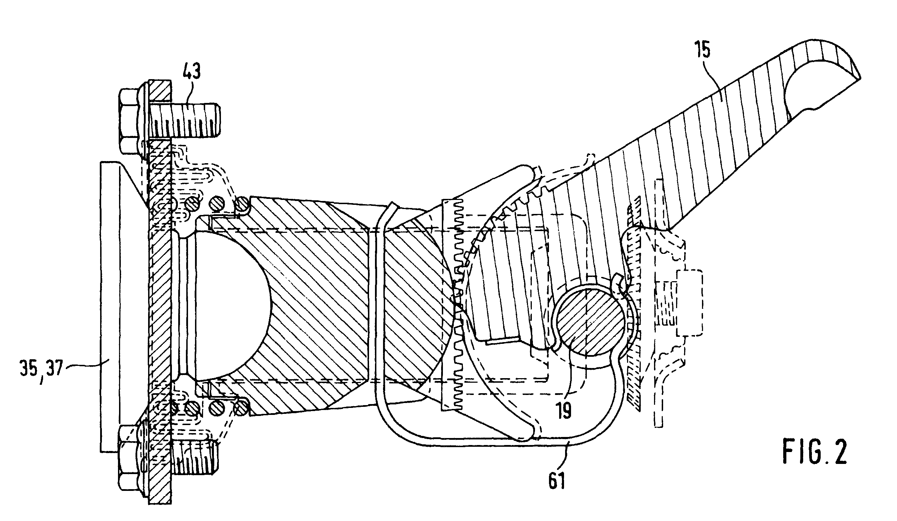

Die insoweit beschriebene Betätigungseinrichtung ist in Fig. 2 der Zeichnung in einer Montageposition wiedergegeben, in welcher sie mittels einer Bügelfeder 61 zusammengehalten ist. Die Bügelfeder 61 durchgreift in der lediglich beispielhaft wiedergegebenen Ausführungsform mittig die Brücke 29 und ist am in Fig. 2 oberen Bereich derselben abgewinkelt eingehängt, während der nach Fig. 2 untere Abschnitt der Bügelfeder 61 rückwärtig geführt ist und unter Federspannung mittig an der Stützwalze 19 eingehängt ist. Aus Fig. 4 der Zeichnung ist zu ersehen, daß im rückwärtigen Bereich des Bremssattels eine Ausnehmung 63 vorgesehen ist, durch welche sich die Bügelfeder 61 in einer die Stützwalze teilweis umgreifenden Art nach oben gerichtet erstreckt (Fig. 2).

Die Bügelfeder 61 stellt nur ein Ausführungsbeispiel einer Einrichtung dar, mit welcher die einzelnen Bestandteile der Zuspanneinrichtung einschließlich der Verschlußplatte 41 und der Druckstücke 35, 37 in der aus Fig. 2 ersichtlichen Weise als eine Einheit zusammengehalten werden. Bei von der Bremsscheibe abgenommenem Bremssattel wird die in Fig. 2 dargestellte, vormontierte Einheit in die bremsscheibenzugewandte Öffnung des Bremssattels eingeführt, bis das Ende des Drehhebels 15, ausgehend von der Position nach Fig. 2, die Schwenklage nach Fig. 1 innerhalb des Bremessattels eingenommen hat. Nach Einführung in den Bremssattel werden die Schraubbolzen 43 mit aufgesteckter Verschlußplatte 41 gegenüber dem Bremssattel verschraubt, wodurch das bremsscheibenzugewandte Ende in vorstehend beschriebener Weise abgedichtet ist. Das rückwärtige, d. h. gemäß Fig. 1 rechte Ende der vormontierten Einheit ist durch die Stützwalze 19 und unter Verspannung durch die Druckfeder 47 am einteilig mit dem Bremssattel bestehenden rückwärtigen Sattelabschnitt abgestützt, d. h. in Fig. 1 ist die betriebsbereite Lage der Zuspanneinrichtung innerhalb des einteiligen Bremssattels dargestellt. An der rückwärtigen Öffnung 17 des Bremssattels wird nachfolgend die (nicht dargestellte) Betätigungseinheit, vorzugweise in Form eines pneumatisch betätigbaren Membranzylinders befestigt, derart, daß die Kolbenstange des Membranzylinders auf die am oberen Ende des Drehhebels befindliche Lagerschale bzw. Pfanne einwirkt.

Nachdem das rückwärtige Ende des Bremssattels weitgehend verschlossen ist, sind seitlich zugängige Mittel vorgesehen, welche einen Eingriff zur Synchronisiereinrichtung gestatten. Gemäß Fig. 4 der Zeichnung ist an der in der Zeichnung rechten Seite des Bremssattels ein Verschluß 65 vorgesehen, welcher nach Demontage eine Arbeitsöffnung in das Innere des Bremssattels freigibt. Durch die Arbeitsöffnung kann bei demontierter Zuspanneinrichtung eine Bearbeitung des Abstützlagers für die Stützwalze 23 vorgenommen werden. Dies kann in gleicher Weise linksseitig am Bremssattel geschehen, d.h. wenn die in der Zeichnung in Fig. 4 dargestellte Rückstelleinheit 67 abgenommen ist, wodurch in dem Verschluß 65 vergleichbarer Weise eine Öffnung in das Innere des Bremssattels freigegeben ist. Die Rückstelieinheit 67 gestattet nach Abnahme der an Ihr aufgeschnappten Abdeckung 69 einen Zugriff, d. h. eine Betätigung des in der Zeichnung nach Fig. 4 linksseitig dargestellten Kegelrades 49, d.h. durch die Rückstelleinheit 67 kann zum Zwecke des Belagwechsels eine Betätigung der Nachstelleinheit unter Verwendung der Synchronisiereinrichtung für beide Stellspindeln vorgenommen werden.

Die Erfindung ist nicht auf die dargestellte Zuspanneinheit bei Verwendung zweier Stellspindeln beschränkt, desgleichen nicht auf die besondere Formgebung der die vormontierte Einheit zusammenhaltenden Bügelfeder 61. Anstelle der Zweispindel-Konstruktion der beispielhaft dargestellten, pneumatisch zuspannbaren Scheibenbremse kann auch eine einspindelige, also mit lediglich einer Stellspindel bzw. einem Druckstück versehene Scheibenbremskonstruktion vorgesehen sein, d. h. das Prinzip der Verwendung eines einteiligen Bremssattels und der als vormontierte Einheit in einen derartigen Bremssattel einführbaren Zuspanneinrichtung ist auch bei Konstruktionen derjenigen, an sich bekannten Art verwendbar, bei welchen eine zentrale Stell- und Druckspindel mittels eines einzelnen Druckstückes auf einen Bremsbelag einzuwirken vermag. Unabhängig von der Art der Zuspanneinrichtung ist also im Rahmen des der Erfindung eigenen Gedankens der Vorteil erzielbar, daß die Bremskräfte über die Stützwalze direkt in den Sattel übertragen werden, d. h. es erfolgt keine Kraftübertragung bei Zug- und Biegebeanspruchung über aufgeschraubte Gehäuseteile, welche Problemen der Undichte ausgesetzt sind.

### Bezugszeichenliste

- 1: Bremssattel
- 3: Bremsscheibe
- 5: Bremsbacke
- 7: Bremsbacke
- 8: Bremszylinder
- 9: Bremsbelag
- 11: Bremsbelag
- 13: Zuspanneinheit
- 15: Drehhebel
- 17: Öffnung
- 19: Stützwalze
- 21: Abstützlager
- 23: Abstützlager
- 25: Absatz
- 27: Absatz
- 29: Brücke
- 31: Stellspindel
- 33: Stellspindel
- 35: Druckstück
- 37: Druckstück
- 39: Gleitelement
- 41: Verschlußplatte
- 43: Schraubbolzen
- 45: Faltenbalg
- 47: Druckfeder
- 49: Kegelrad
- 51: Kegelrad
- 53: Zahnradabschnitt
- 57: Hülse
- 59: Zahnrad
- 61: Bügelfeder
- 63: Ausnehmung
- 65: Verschluß
- 67: Rückstelleinheit
- 69: Abdeckung

## Patentansprüche

1. Scheibenbremse für Fahrzeuge, insbesondere Straßenfahrzeuge, mit einem eine Bremsscheibe (3) umfassenden Bremssattel (1), in dessen rückwärtigem, bremsscheibenabgewandten und weitgehend geschlossenem Bereich eine Zuspanneinheit (13) angeordnet ist, wobei die Zuspanneinheit (13) mit einem von einem Betätigungszylinder schwenkbaren Drehhebel (15) versehen ist und der Drehhebel (15) mittels eines Exzenters auf eine gegen Federkraft in Richtung der Bremsscheibe (3) verschiebbare, wenigstens eine mit einem Druckstück (35; 37) versehene Stellspindel (33) aufweisende Brücke (29) einzuwirken vermag, **gekennzeichnet durch** folgende Merkmale:
a) der Bremssattel ist einteilig ausgebildet
b) die Zuspanneinheit (13) ist als vormontierte Einheit ausgebildet; und
c) die der Bremsscheibe (3) zugewandte Öffnung im Bremssattel (1) ist so groß bemessen, daß die vormontierte Zuspanneinheit (13) bei von der Bremsscheibe (3) abgenommenem Bremssattel (1) **durch** diese Öffnung einführbar ist.

2. Scheibenbremse nach Anspruch 1, **dadurch gekennzeichnet, daß** die der Bremsscheibe (3) zugewandte Öffnung des Bremssattels bei eingeführter Zuspanneinheit (13) durch eine von dem wenigstens einen Druckstück (35; 37) durchsetzte Verschlußplatte (41) abgeschlossen ist.

3. Scheibenbremse nach Anspruch 2, **dadurch gekennzeichnet, daß** die Verschlußplatte (41) mittels Schraubbolzen (43) mit dem Bremssattel (1) verschraubbar ist.

4. Scheibenbremse nach Anspruch 1, **dadurch gekennzeichnet, daß** die Zuspanneinheit (13) durch ein Bügelelement als vormontierte Einheit zusammengefügt ist.

5. Scheibenbremse nach Anspruch 4, **dadurch gekennzeichnet, daß** das Bügelelement aus einer Bügelfeder (61) besteht, welche mit einem Ende durch die Brücke (29) der Zuspanneinheit hindurchgeführt ist und mit dem entgegengesetzten Ende in Form eines U-förmigen Bügels den Drehhebel (15) und das Abstützlager (Stützwalze 19) desselben umfaßt.

6. Scheibenbremse nach einem der vorangehenden Ansprüche, bei welcher die vom Exzenter des Drehhebels (15) betätigbare Brücke (29) zwei mit ihr verschraubte Stellspindeln (31, 33) mit Druckstücken trägt, **dadurch gekennzeichnet, daß** die Druckstücke (35, 37) jeweils mittels eines Faltenbalgs (45) gegenüber der von ihnen durchsetzten Verschlußplatte (41) abgedichtet sind.

## Claims

1. Disc brake for vehicles, in particular road vehicles, comprising a brake calliper (1) including a brake disc (3), with a clamping unit (13) being disposed in the rear and largely closed section of said brake calliper, which is turned away from said brake disc, wherein said clamping unit (13) is provided with a pivoting lever (15) adapted to be swivelled by an actuating cylinder and said pivoting lever (15) is capable of acting, via an eccentric, upon a bridge element (29) which is displaceable against an elastic force in a direction towards said brake disc (3) and comprises at least one adjusting spindle (33) provided with a pressure member (35; 37), **characterised by** the following features:
a) said calliper is configured as one-piece;
b) said clamping unit (13) is configured as a pre-assembled unit; and
c) the opening in said brake calliper (1), which faces said brake disc (3) is dimensioned so as to allow for introduction of said pre-assembled clamping unit (13) through this opening when said brake calliper (1) is removed from said brake disc (3).

2. Disc brake according to Claim 1, **characterised in that** when said clamping unit (13) is introduced said brake calliper opening facing said brake disc (3) is closed by a closure plate (41) penetrated by at least one pressure member (35; 37).

3. Disc brake according to Claim 2, **characterised in that** said closure plate (41) is adapted to be screwed to said brake calliper (1) by means of screw bolts (43).

4. Disc brake according to Claim 1, **characterised in that** said clamping unit (13) is assembled by a strap element so as to form a pre-assembled unit.

5. Disc brake according to Claim 4, **characterised in that** said strap element consists of a strap spring (61) which is passed by one end through said bridge element (29) of said clamping unit and by its opposite end encloses said pivoting lever (15) and the supporting bearing (supporting roller 19) thereof in the form of a U-shaped bow.

6. Disc brake according to any of the preceding Claims, wherein said bridge element (29), which is adapted for being actuated by the eccentric of said pivoting lever (15), carries two adjusting spindles (31, 33) with pressure members, which spindles are screwed to it, **characterised in that** each of said pressure members (35, 37) is sealed by means of bellows (45) from said closure plate (41) through which these members penetrate.

## Revendications

1. Frein à disque pour véhicules, en particulier véhicules routiers, comprenant un étrier de frein (1) renfermant une disque à frein (3) à une unité de serrage (13) étant disposée dans la partie arrière et largement fermée dudit étrier de frein, qui est détournée de ladite disque à frein, dans laquelle ladite unité de serrage (13) est équipée d' un levier rotatif (15) à être basculé par un cylindre de commande et ledit levier rotatif (15) étant capable d'agir, via un excentrique, sur un élément de pontage (29) qui est déplacable à l'encontre d'une force de ressort en une direction vers ladite disque à frein (3) et comprend au moins une broche de réglage (33) à un élément presseur (35; 37), **caractérisée par** les caractéristiques suivantes :
a) ledit étrier de frein (1) est formé d'une seule pièce ;
b) ladite unité de serrage (13) est configurée sous forme d'une unité sous-groupe montée ; et
c) l'ouverture dans ledit étrier de frein (1), qui se trouve en face de ladite disque à frein (3) est dimensionnée de facon à permettre l'introduction de ladite unité sous-groupe montée (13) à travers cette ouverture quand ledit étrier de frein (1) démonté de ladite disque à frein (3).

2. Frein à disque selon la revendication 1, **caractérisée en ce que** quand ladite unité de serrage (13) est introduite, l'ouverture dudit étrier de frein en face de ladite disque à frein (3) est fermée par une plaque de fermeture (41) à travers laquelle passe au moins un élément presseur (35; 37).

3. Frein à disque selon la revendication 2, **caractérisée en ce que** ladite plaque de fermeture (41) est concue à être vissée audit étrier de frein (1) moyennant des boulons filetés (43).

4. Frein à disque selon la revendication 1, **caractérisée en ce que** ladite unité de serrage (13) est réunie moyennant une bride afin de former une unité sous-groupe assemblée.

5. Frein à disque selon la revendication 4, **caractérisée en ce que** ladite bride est formée par un ressort de bride (61) qui est passé, par une extrémité, par ledit élément de pontage (29) de ladite unité de serrage et renfermé, par son extrémité opposée, ledit levier rotatif (15) et le palier d'appui (galet support 19) du dernier sous forme d'une bride en U.

6. Frein à disque selon une quelconque des revendications précédentes, dans laquelle ledit élément de pontage (29), qui est conçu à être commandé par ledit excentrique dudit levier rotatif (15), porte deux broches de réglage (31, 33) à éléments presseurs, lesquelles broches y sont vissées, **caractérisée en ce que** chacun desdits éléments presseurs (35, 37) est étanché, moyennant un soufflet respectif (45), de ladite plaque de fermeture (41) à travers laquelle ces éléments pénètrent.
